# EUROPÄISCHE PATENTSCHRIFT

(11) **EP 1 022 888 B1**
(45) Veröffentlichungstag und Bekanntmachung des Hinweises auf die Patenterteilung: **25.05.2005**
(21) Anmeldenummer: 99810039.0
(22) Anmeldetag: 20.01.1999
(51) Int. Cl.: H04M 3/38

(54) **Verfahren, Telekommunikationssystem und geeignete Vorrichtung zur Sicherung von Diensten in einem Telekommunikationsnetz**
Method or system to secure the access to telecommunication services in a network
Methode ou système pour la protection de l'accès au services de télécommunications

(43) Veröffentlichungstag der Anmeldung: 26.07.2000
(73) Patentinhaber: Swisscom Fixnet AG, Post:CH-3050 Bern (CH)
(72) Erfinder: Cochard, Jean-Luc, 1782 Belfaux (CH); Moser, Thomas, 3013 Bern (CH)
(74) Vertreter: BOVARD AG - Patentanwälte

(56) Entgegenhaltungen:
- WO-A-94/12973
- WO-A-96/31971
- WO-A-97/49217
- WO-A-98/16906
- DE-A- 19 755 124
- NL-C- 1 002 543
- US-A- 5 638 431
- US-A- 5 737 701
- NESSETT D M: "LAYERING CENTRAL AUTHENTICATION ON EXISTING DISTRIBUTED SYSTEM TERMINAL SERVICES" PROCEEDINGS OF THE SYMPOSIUM ON SECURITY AND PRIVACY, OAKLAND, MAY 1 - 3, 1989, 1. Mai 1989 (1989-05-01), Seiten 290-299, XP000041245 INSTITUTE OF ELECTRICAL AND ELECTRONICS ENGINEERSISBN: 0-8186-1939-2

## Beschreibung

Die vorliegende Erfindung betrifft ein Verfahren, ein Telekommunikationssystem und eine geeignete Vorrichtung zur Sicherung von Diensten in einem Telekommunikationsnetz, insbesondere betrifft sie ein Verfahren, ein Telekommunikationssystem und eine geeignete Vorrichtung zur Sicherung von Diensten, die von einer mit dem genannten Telekommunikationsnetz verbundenen Dienstzentrale angeboten und von Teilnehmern in diesem Telekommunikationsnetz mittels geeigneten Kommunikationsendgeräten gewählt und benützt werden, wobei genannte Teilnehmer autentifiziert werden indem jeweils die angegebene Identität eines Teilnehmers verifiziert wird.

Die Patentschrift US 5,502,759 beschreibt eine Vorrichtung und ein Verfahren um Telefontaxbetrug zu verhindern, indem basierend auf zentralisierter Verifizierung der Stimme die angegebene Identität eines Teilnehmers authentifiziert wird. Gemäss der in US 5,502,759 beschriebenen Methode werden Telefonanrufe in einer Sprachverifizierungsvorrichtung, die zwischen einem Sprachserver und einer Vermittlungsstelle geschaltet ist, abgefangen und ein vom Teilnehmer gesprochenes Passwort wird entgegengenommen mit einem abgespeicherten Sprechmuster verglichen, welches in einer Initialisierungsphase für dieses Passwort abgespeichert wurde. Wenn die verglichenen Sprechmuster übereinstimmen wird gemäss US 5,502,759 der abgefangene Telefonanruf zur angerufenen Station durchgeschaltet und die Verbindung erstellt.

In der Patentschrift US 5,297,194 wird ein System beschrieben, welches es ermöglicht die Identität eines Anrufers in einem Telekommunikationsnetzwerk zu verifizieren, indem gesprochene Äusserungen eines Anrufers mit vorher abgespeicherten Sprechmustern verglichen werden. In der Patentschrift US 5,297,194 wird beschrieben, dass die Identität des Anrufers entweder durch eine Identifizierungsnummer gegeben ist, wobei die gesprochene Identifizierungsnummer mit für diese Identifizierungsnummer abgespeicherten Sprechmustern verglichen wird, oder die Identität durch die Station auf der angerufen wird gegeben ist, wobei gesprochene Äusserungen mit für diese Station abgespeicherten Sprechmustern verglichen werden. Bei einem positiven Vergleich wird gemäss US 5,297,194 der Anruf durchgeschaltet und die Verbindung erstellt.

Die Patentschrift WO 94/12973 beschriebt ein Verfahren um den Zugang zu Diensten über ein Telefonnetz zu kontrollieren, in welchem der Sprecher anhand eines gesprochenen Passworts verifiziert wird, wobei der Schwellenwert zur Beurteilung der Sprecherübereinstimmung an bestimmte Bedingungen angepasst werden kann, beispielsweise in Abhängigkeit des betreffenden gewählten Diensts oder der angewählten (vorausbestimmten) Station, und in welchem dem Sprecher nötigenfalls zusätzliche persönliche Verifizierungsfragen gestellt werden können.

Die Patentschrift US 5,502,759 beschreibt eine Vorrichtung zur zentralisierten Verifizierung eines Sprechers durch Vergleichen von aktuellen und abgespeicherten Sprechmustern, um Anrufe in einem öffentlich geschalteten Telefonnetz durchzuschalten oder zu unterbinden.

Die Patentschrift WO 93/21718 beschreibt eine Zentrale mit Spracherkennung und Sprecherverifizierung, welche für einen verifizierten Teilnehmer automatisch die Nummer eines Partners wählt, für welchen der Teilnehmer Schlüsselwörter abgespeichert hat, die er wieder mündlich eingibt, wenn er den betreffenden Partner anrufen will.

Die Patentschrift GB 2 314 436 A beschreibt eine Vorrichtung für die Authentifizierung eines Kunden, welche abgespeicherte kundenspezifische Informationen unter Benützung von Spracherkennung iterativ mit vom Kunden abgefragten Informationen vergleicht.

In der Patentschrift US 5,638,431 wird ein Verfahren und System zur Validierung von Telefonkarten beschrieben, in welchem die Kartenvalidierung mittels einer Anfrage über ein Signalisierungssystem an einen Server des Dienstanbieters geleitet wird, der die Telefonkarte ausgegeben hat. Dieser Server bestimmt, ob ein auf der Telefonkarte gespeicherter Kenncode gültig ist und übermittelt eine entsprechende Antwort an das Netzwerk, von welchem die Anfrage eingetroffen ist.

In der Patentanmeldung WO 96/31971 wird ein Verfahren und System für den Zugriff auf das Telefonnetz beschrieben. Gemäss WO 96/31971 wird eine Telefonkarte verwendet, auf welcher sowohl eine Telefonzugangsnummer als auch ein Kenncode maschinenlesbar codiert und gespeichert sind. Die Telefonkarte wird nach WO 96/31971 in ein spezielles Lesegerät eingeführt, das entsprechend die gespeicherten Daten liest und entsprechende Wähltöne erzeugt, die über das Mikrofon eines Telefonapparats in das Telefonnetz eingeleitet werden.

Auch wenn einige der oben erwähnten Patentschriften im Ansatz eine zentralisierte Lösung für die Sprecherverifizierung eines Teilnehmers in einem Telefonsystem beschreiben, offenbart keines dieser Dokumente konkret wie eine solche zentralisierte Sprecherverifizierung für andere Dienste als die Erstellung von Telefonanrufen verwendet werden kann, insbesondere gibt keines dieser Dokumente Hinweise wie andere Dienste, respektive Vorrichtungen, diese zentralisierte Sprecherverifizierung beanspruchen können.

In der Patentanmeldung WO 98/16906 wird ein Verfahren für die Zugangskontrolle zu einem oder mehreren Diensten eines Systems beschrieben. Um Zugang zu den Diensten zu erhalten ruft ein Benutzer gemäss WO 98/16906 den Server an, der das Zugangskontrollverfahren ausführt und identifiziert sich über einen Kenncode. Das Zugangskontrollverfahren nach WO 98/16906 führt eine Sprecherauthentifizierung durch Vergleichen aktueller und gespeicherter Stimmmerkmale des Benutzers durch.

In keinem der oben stehenden Dokumente wird beschrieben oder auch nur erwähnt, wie zusätzlich zur Verifizierung eines anrufenden Teilnehmers auch ein angerufener Teilnehmer verifiziert werden kann, was insbesondere bei Gesprächen mit einem zwischen den Gesprächspartnern vertraulichen Gesprächsgegenstand vorteilhaft oder gar erforderlich sein kann.

Es ist eine Aufgabe dieser Erfindung ein neues und besseres Verfahren, Telekommunikationssystem und geeignete Vorrichtung zur Sicherung von Diensten vorzuschlagen, welche Dienste insbesondere von Dienstzentralen in einem Telekommunikationsnetz angeboten werden.

Gemäss der vorliegenden Erfindung wird dieses Ziel insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass die angegebene Identität von Teilnehmern in einem Telekommunikationsnetz, die mit ihren Kommunikationsendgeräten von einer Dienstzentrale in diesem Telekommunikationsnetz, welches beispielsweise das öffentliche geschaltete Telefonnetz und/oder das Internet umfasst, angebotene Dienste wählen und benutzen, durch einen zentralisierten Verifizierungs-Server authentifiziert werden, der bei der Authentifizierung eines genannten Teilnehmers einen Authentizitätsbeleg generiert und diesen Authentizitätsbeleg an eine betreffende Dienstzentrale überträgt, und dass in dieser Dienstzentrale auf Grund von empfangenen Authentizitätsbelegen betreffende Dienste für betreffende Teilnehmer ausgeführt werden.

Erfindungsgemäss werden während der Ausführung von mindestens gewissen der genannten Dienste daran beteiligte Teilnehmer erneut authentifiziert, und der Dienst wird für mindestens einen Teilnehmer abgebrochen, wenn dieser Teilnehmer nicht positiv authentifiziert wird. Die erneute Verifizieren kann fortwähren kontinuierlich, periodisch, oder sporadisch, beispielsweise auf Anfrage der betreffenden Dienstzentrale, erfolgen. Eine erneute Verifizierung hat den Vorteil, dass während der ganzen Ausführungszeit des betreffenden Dienstes die Authentizität der daran beteiligten Teilnehmer sichergestellt wird.

Vorzugsweise können in mindestens gewissen der genannten Dienste mehrere Teilnehmer beteiligt sein, wobei für mindestens gewisse dieser Dienste mit mehreren Teilnehmern jeder der am Dienst beteiligten Teilnehmer authentifiziert wird und für jeden authentifizierten Teilnehmer ein Authentizitätsbeleg an die betreffende Dienstzentrale übertragen wird. Die Authentifizierung von mehreren an einem Dienst beteiligten Teilnehmern hat den Vorteil, dass nicht nur die Identität des anrufenden Teilnehmers sondern von allen, oder je nach dem betreffenden Dienst von mehreren, an einem Dienst beteiligten Teilnehmer, insbesondere auch angerufene Teilnehmer, gewährleistet werden kann.

In einer Ausführungsvariante ist ein solcher Dienst mit mehreren Teilnehmern ein gesicherter Gesprächsdienst, in welchem ein anrufender Teilnehmer der betreffenden Dienstzentrale, die diesen Gesprächsdienst anbietet, eine Teilnehmeridentifizierung von mindestens einem anzurufenden Teilnehmer übermittelt, und in welchem die betreffende Dienstzentrale eine Verbindung zwischen dem anrufenden und mindestens einem anzurufenden Teilnehmer erstellt, wenn sie für diese Teilnehmer entsprechende Authentizitätsbelege erhält. Ein solcher gesicherter Gesprächsdienst ist insbesondere bei Gesprächen mit einem zwischen den Gesprächspartnern vertraulichen Gesprächsgegenstand vorteilhaft.

In einer bevorzugten Ausführungsvariante werden bei der Authentifizierung eines Teilnehmers aktuelle Sprachmerkmale dieses Teilnehmers mit abgespeicherten Sprachmerkmalen dieses Teilnehmers verglichen.

In einer Ausführungsvariante leitet das Telekommunikationsnetz mindestens gewisse Anrufe an eine genannte Dienstzentrale über den Verifizierungs-Server, das heisst ein Anruf an eine genannte Dienstzentrale wird vom Telekommunikationsnetz zur Authentifizierung von betreffenden Teilnehmern über einen Verifizierungs-Server geroutet. In einer zusätzlichen oder alternativen Ausführungsvariante übermittelt eine genannte Dienstzentrale bei Anforderungen von mindestens gewissen Diensten die Teilnehmeridentifizierungen von betreffenden zu authentifizierenden Teilnehmern an den genannten Verifizierungs-Server, das heisst eine genannte Dienstzentrale kann die Authentifizierung von Teilnehmern als Dienst vom genannten Verifizierungs-Server anfordern und von diesem ausführen lassen.

In einer Ausführungsvariante ist die Identität eines Teilnehmers durch eine Identifizierungsnummer gegeben, die in einem Identifizierungsmodul gespeichert ist, welches entfernbar mit dem Kommunikationsendgerät dieses Teilnehmers verbunden ist. In einer zusätzlichen oder alternativen Ausführungsvariante ist die Identität eines Teilnehmers durch eine ldentifizierungsnummer gegeben ist, die vom Teilnehmer über Bedienungselemente seines Kommunikationsendgeräts eingegeben wird. In einer weiteren zusätzlichen oder alternativen Ausführungsvariante ist die genannte Identität eines Teilnehmers durch eine Identifizierungsnummer gegeben, die vom Teilnehmer mittels gesprochener Sprache mit seinem Kommunikationsendgerät übermittelt wird.

In einer bevorzugten Ausführungsvariante umfasst ein genannter Authentizitätsbeleg eine elektronische Signatur, beispielsweise eine elektronische Signatur des genannten Verifizierungs-Servers.

In einer Ausführungsvariante umfassen mindestens gewisse genannte Authentizitätsbelege eine Angabe über den Vertrauensgrad der betreffenden Authentifizierung.

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm mit einem Telekommunikationsnetz, mit welchem Kommunikationsendgeräte, eine Dienstzentrale und ein Verifizierungs-Server verbunden sind.
Figur 2 zeigt ein Blockdiagramm, welches die Weiterleitung (Routing) eines Anrufs, von einem Kommunikationsendgerät an eine Dienstzentrale, über einen Verifizierungs-Server schematisch illustriert.
Figur 3 zeigt ein Blockdiagramm, welches die Erstellung einer Verbindung, von einem Kommunikationsendgerät an eine Dienstzentrale, über einen Verifizierungs-Server schematisch illustriert.
Figur 4 zeigt ein Blockdiagramm, welches die Erstellung einer gesicherten Verbindung zwischen zwei Kommunikationsendgeräten über eine Dienstzentrale und über einen Verifizierungs-Server schematisch illustriert.

Die Bezugszeichen 1 und N beziehen sich auf Kommunikationsendgeräte, beispielsweise mobile oder fest installierte Telefongeräte, und/oder mobile oder fest installierte Computer, welche an ein Telekommunikationsnetz 2 angeschlossen werden können, und mittels welchen Teilnehmer in diesem Telekommunikationsnetz 2 kommunizieren können. Die Bezugszeichen 1 und N können sich auch auf die Teilnehmer beziehen, welche das betreffenden Kommunikationsendgerät benutzen. Das Telekommunikationsnetz 2 umfasst beispielsweise das Internet und/oder das öffentliche geschaltete Telefonnetz (Public Switched Telefone Network, PSTN), welches Telefonnetz seinerseits ISDN-Netze (Integrated Services Digital Network) und Mobilnetze, zum Beispiel gemäss dem GSM- oder UMTS-Standard, umfassen kann und welches beispielsweise auch über SS7 (Signalisation System Number 7) Signalisierungsdienste verfügen kann.

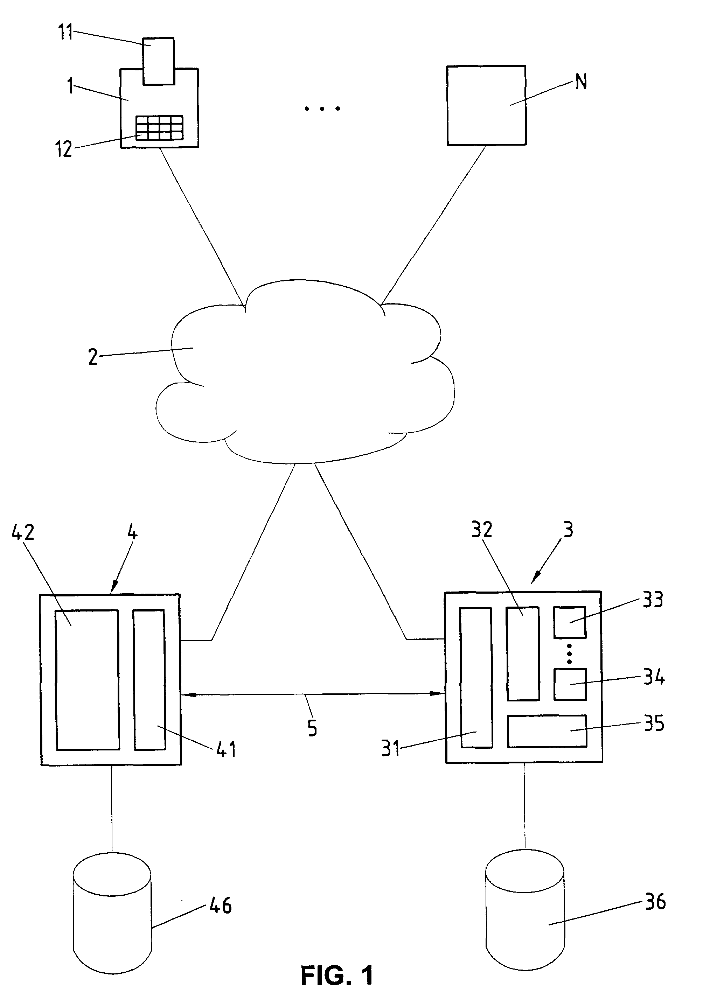

Mit dem genannten Telekommunikationsnetz 2 sind mehrere Dienstzentralen 3 verbunden, von denen in der Figur 1 eine dargestellt ist. Eine Dienstzentrale 3 ist beispielsweise ein handelsüblicher Server, der über ein Kommunikationsmodul 31 verfügt, welches die nötigen Hardware- und Softwarekomponenten umfasst um ans Telekommunikationsnetz 2 angeschlossen werden zu können und um in diesem Telekommunikationsnetz 2 kommunizieren zu können. Die Dienstzentrale 3 verfügt zudem über mindestens ein Dienstmodul 33, 34, welches die notwendigen Hardware- und/oder Softwarekomponenten umfasst um einen Dienst auszuführen, der von Teilnehmern im Telekommunikationsnetz 2 mittels deren Kommunikationsendgeräte 1, N angefordert werden kann. Auf Beispiele für solche Dienste wird später detaillierter eingegangen. Wie in Figur 1 illustriert wird, umfasst die Dienstzentrale 3 ein Sicherungsmodul 32 mit programmierten Softwarefunktionen auf die später näher eingegangen wird.

Je nach Ausführungsvariante der Dienstzentrale 3 und Art des Dienstes kann ein Teilnehmer einen gewünschten Dienst beispielsweise direkt über eine vordefinierte Telefonnummer anwählen oder er kann eine Dienstzentrale 3 über eine Telefonnummer anrufen und dann auf Anfrage der Dienstzentrale 3, beispielsweise unter sprachgesteuerter Menuführung, den gewünschten Dienst spezifizieren, beispielsweise mittels Bedienungselementen 12 des Kommunikationsendgeräts 1 oder mittels ins Kommunikationsendgerät 1, N gesprochenen Instruktionen, die von der Dienstzentrale 3 über Spracherkennungsfunktionen entgegengenommen werden.

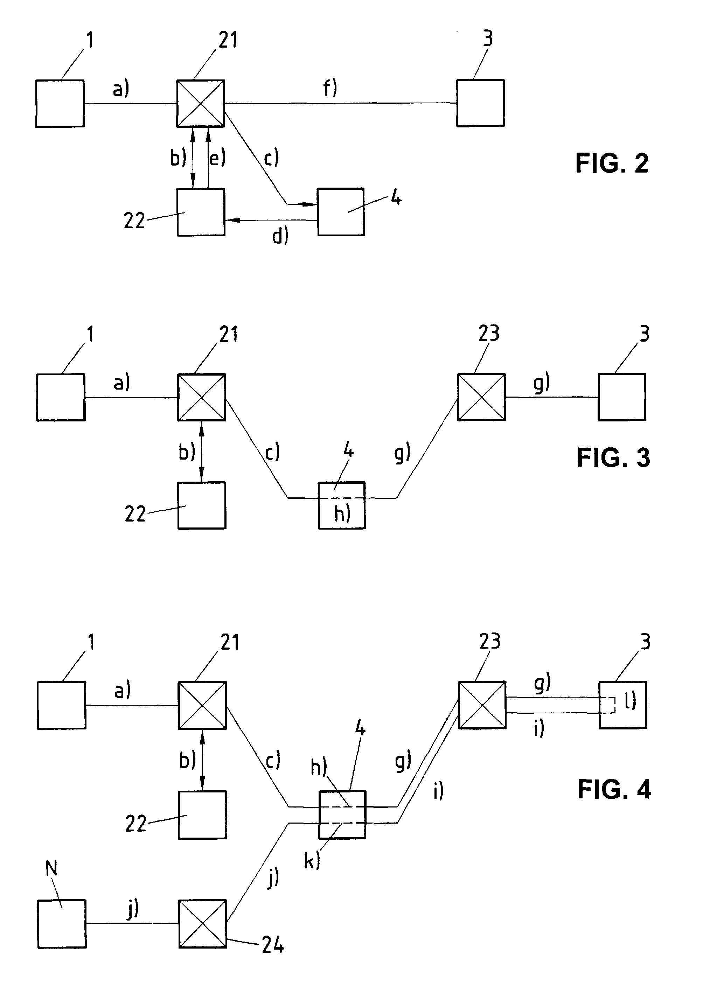

Falls ein Teilnehmer einen gewünschten Dienst direkt über eine vordefinierte Telefonnummer anwählen kann, kann im Telekommunikationsnetz 2 vorgesehen werden, beispielsweise durch einen entsprechenden Eintrag in einer nicht dargestellten Tabelle des Telekommunikationsnetzes 2, dass ein solcher Anruf eines Teilnehmers vom Telekommunikationsnetz 2 automatisch über einen Verifizierungs-Server 4 geleitet wird (Routing), wo der Anruf von einem Kommunikationsmodul 41 entgegengenommen wird und wo die Identität des anrufenden Teilnehmers mittels eines Verifizierungsmoduls 42 verifiziert wird wie später detaillierter beschrieben wird. Wie in den Figuren 2, 3 und 4 illustriert wird, kann das Routing des Dienstanrufs eines Teilnehmers 1 an den Verifizierungs-Server 4 im Telekommunikationsnetz 2 beispielsweise so ausgeführt werden, dass
a) eine Verbindung vom anrufenden Kommunikationsendgerät 1 zu einer Vermittlungsstelle (Switch) 21 erstellt wird,
b) die Vermittlungsstelle 21 die Nummer, respektive Adresse, des nächstgelegenen verfügbaren Verifizierungs-Servers 4 von einem Service Control Point (SCP) 22 abfragt, und
c) die Vermittlungsstelle 21 den Anruf an diesen Verifizierungs-Server 4 leitet.

Der Verifizierungs-Server 4 ist beispielsweise ein handelsüblicher Server, der mit dem Kommunikationsmodul 41 über die nötigen Hardware- und Softwarekomponenten verfügt um ans Telekommunikationsnetz 2 angeschlossen werden zu können und um in diesem Telekommunikationsnetz 2 kommunizieren zu können, und der mit dem Verifizierungsmodul 42 über die notwendigen Hardware- und/oder Softwarekomponenten verfügt um die Identität eines Teilnehmers verifizieren zu können. Bei der positiven Authentifizierung des Teilnehmers wird im Verifizierungs-Server 4, beispielsweise im Verifizierungsmoduls 42, ein Authentizitätsbeleg für den betreffenden Teilnehmer vorbereitet, wie später detaillierter beschrieben wird, und der Anruf wird an die betreffende Dienstzentrale 3 weitergeleitet und der genannte Authentizitätsbeleg an diese Dienstzentrale 3 übermittelt. Die Weiterleitung des Anrufs und die Übermittlung des Authentizitätsbelegs an die Dienstzentrale 3 kann auf verschiedene Weise erfolgen. In Figur 2 wird beispielsweise die Integration des Verifizierungs-Servers 4 als Intelligent Network (IN) Dienst illustriert, wobei
d) der Verifizierungs-Server 4 den Authentizitätsbeleg an den SCP 22 überträgt, beispielsweise mittels Funktionen des Kommunikationsmoduls 41, zum Beispiel als Generic Number Parameter des SS7-Protokolls,
e) der SCP 22 die Nummer des angerufenen Dienstes und den Authentizitätsbeleg an die Vermittlungsstelle 21 übergibt, und
f) die Vermittlungsstelle 21 den Anruf und den Authentizitätsbeleg an die Dienstzentrale 3 leitet.

Im Szenario von Figur 2 hat der Verifizierungs-Server 4 bloss eine Gatekeeper-Rolle, da er nach erfolgter Authentifizierung des anrufenden Teilnehmers und erstellter Verbindung zur Dienstzentrale 3 die Kontrolle über den Anruf vollständig angibt. Je nach Art des auszuführenden Dienstes, zum Beispiel ein Telefonanruf mit einer Calling Card oder die telefonische Abwicklung von Bankgeschäften, oder die Abfrage von vertraulichen und/oder persönlichen Informationen kann die einmalige Authentifizierung eines betreffenden Teilnehmers sinnvoll und genügend sein. In den Figuren 3 und 4 sind Szenarien illustriert, in welchen die Authentizität eines oder mehrerer Teilnehmer fortwährend überwacht werden kann, beispielsweise kontinuierlich oder periodisch, da die Verbindung für den Anruf über den Verifizierungs-Server 4 erstellt wird, wobei
a-c) der Anruf eines Teilnehmers 1 wie oben beschrieben an den Verifizierungs-Server 4 geleitet wird,
g) der Verifizierungs-Server 4 die Dienstzentrale 3 anruft, beispielsweise mittels Funktionen des Kommunikationsmoduls 41, zum Beispiel über die Vermittlungsstelle 23, und
h) der Verifizierungs-Server 4 die Verbindung zwischen dem Kommunikationsendgerät 1 und der Dienstzentrale 3 erstellt und aktuelle Authentizitätsbelege einmalig, periodisch oder auf Anfrage an die Dienstzentrale 3 überträgt, beispielsweise mittels Funktionen des Kommunikationsmoduls 41, zum Beispiel auf einem ISDN D-Kanal.

In den Szenarien der Figuren 3 und 4 kann der Verifizierungs-Server 4 und/oder die Dienstzentrale 3 die Verbindung abbrechen, wenn der Verifizierungs-Server 4 die Authentizität des Anrufers nicht mehr gewährleisten kann, respektive wenn die Dienstzentrale 3 einen erwarteten Authentizitätsbeleg nicht erhält. Entsprechende Funktionen in den Kommunikationsmodulen 31 und 41 können beispielsweise durch das Sicherungsmodul 32 der Dienstzentrale 3, respektive durch das Verifizierungsmodul 42 des Verifizierungs-Servers 4 aktiviert werden.

Die Authentifizierung eines oder mehrerer Teilnehmer kann vom Verifizierungs-Server 4 aber auch als Dienst angeboten werden, der von der Dienstzentrale 3 angefordert werden kann. Der Vorteil dieses Vorgehens besteht darin, dass die Kontrolle über die Anforderung einer Authentifizierung eines Teilnehmers in der Dienstzentrale 3 bleibt, so dass im Telekommunikationsnetz 2 keine Umleitungstabellen aufgesetzt werden müssen. Der Anruf eines Teilnehmers an die Dienstzentrale 3 zur Anforderung eines Dienstes wird im erwähnten Kommunikationsmodul 31 der Dienstzentrale 3 entgegengenommen und beispielsweise an das Sicherungsmodul 32 der Dienstzentrale 3, weitergeleitet. Je nach Ausführungsvariante leitet das Sicherungsmodul 32 den Anruf direkt an den Verifizierungs-Server 4 zur Authentifizierung des betreffenden Teilnehmers weiter oder nimmt vom anrufenden Teilnehmer, beispielsweise unter Zuhilfenahme einer sprachgesteuerten Menuführung, weitere Informationen zur Bestimmung des gewünschten Dienstes und/oder zur Bestimmung der Identität des betreffenden Teilnehmers und/oder weiterer am gewünschten Dienst involvierten Teilnehmer entgegen und übermittelt die ldentifizierungsinformationen an den Verifizierungs-Server 4. Je nach Anwendung und Art des Dienstes kann die Dienstzentrale 3 für einen betreffenden Teilnehmer auch eine oder mehrere, beispielsweise periodisch und/oder in Abhängigkeit der Sicherheitsanforderung von auszuführenden Funktionen, Authentifizierungen durch den Verifizierungs-Server 4 anfordern und den betreffenden Dienst für einen Teilnehmer ablehnen, respektive abbrechen, der nicht positiv authentifiziert werden kann.

Das Abfragen von zusätzlichen Informationen über weitere am gewünschten Dienst involvierte Teilnehmer kann auch erst nach erfolgter Authentifizierung des anrufenden Teilnehmers erfolgen und kann von der Dienstzentrale 3 auch in den oben beschriebenen Szenarien, die in den Figuren 2 und 3 illustriert sind, durchgeführt werden.

Vorteilhafterweise werden in der Dienstzentrale 3, insbesondere für Dienste an denen mehr als ein Teilnehmer beteiligt ist, Informationen über die an einem Dienst beteiligten Teilnehmer geführt, zum Beispiel Teilnehmeridentifizierungen, Angaben betreffend die Authentizität eines Teilnehmers und/oder über den betreffenden Dienst. Solche Informationen können beispielsweise vom oben erwähnten Sicherungsmodul 32 der Dienstzentrale 3 über das Kommunikationsmodul 31 entgegengenommen und beispielsweise in einer Tabelle 35 gespeichert werden.

Die Kommunikation zwischen dem Verifizierungs-Server 4 und einer Dienstzentrale 3 kann über das Telekommunikationsnetz 2 erfolgen. In einer alternativen oder zusätzlichen Variante verfügen die Kommunikationsmodule 31 und 41 der Dienstzentrale 3, beziehungsweise des Verifizierungs-Servers 4, über weitere nötige Hardware- und Softwarekomponenten um über eine durch den Doppelpfeil 5 angedeutete alternative Kommunikationsverbindung, beispielsweise eine ISDN-Verbindung, eine Internet-/Intranet-Verbindung (IP-Protokoll) oder eine LAN-Verbindung (Local Area Network), miteinander zu kommunizieren. Schliesslich kann die Kommunikation zwischen dem Verifizierungs-Server 4 und der Dienstzentrale 3 auch über lokale Softwareschnittstellen ausgeführt werden, sollten der Verifizierungs-Server 4 und die Dienstzentrale 3 auf einem gemeinsamen Computer implementiert werden, was allerdings im Allgemeinen bei zentralisierten Verifizierungs-Servern 4 nicht der Fall sein wird.

Wie bereits oben erwähnt wurde können in einer Dienstzentrale 3 Dienste angeboten werden, in welchen mehr als ein Teilnehmer involviert sind. Ein solcher Dienst ist insbesondere ein gesicherter Gesprächsdienst, beispielsweise das Dienstmodul 34, in welchem die Gesprächsteilnehmer einmal bei der Verbindungserstellung oder fortwährend während des Gesprächs authentifiziert werden. Je nach Ausführungsvariante fragt die Dienstzentrale den anrufenden Teilnehmer 1 vor oder nach dessen Authentifizierung durch den Verifizierungs-Server 4 nach der Identität eines oder mehrerer weiterer Gesprächsteilnehmer N, beispielsweise nach der Rufnummer oder einer anderen eindeutigen Identifikationsnummer. Die Identifikationsinformationen werden von der Dienstzentrale 3, wie oben beschrieben, über das Telekommunikationsnetz 2 oder über eine alternative Kommunikationsverbindung 5 an den Verifizierungs-Server 4 übertragen, der den oder die zusätzlichen Teilnehmer N anruft. Nach erfolgreicher Authentifizierung der weiteren Teilnehmer N schickt der Verifizierungs-Server 4 einen oder mehrere entsprechende Authentizitätsbelege an die Dienstzentrale 3 und erstellt die Verbindung(en) zwischen dem oder den weiteren Teilnehmern N und der Dienstzentrale 3 mit dem gesicherten Gesprächsdienst 34, welche die gesicherte Verbindung zwischen dem anrufenden Teilnehmer 1 und den weiteren angerufenen Teilnehmern N erstellt. Ein Beispiel einer diesbezüglichen Ausführungsvariante ist in der Figur 4 illustriert, wobei
a-c, g-h) die Verbindung zwischen dem anrufenden Teilnehmer 1 und der Dienstzentrale 3 wie oben beschrieben erstellt wird,
i) die Dienstzentrale 3 die vom anrufenden Teilnehmer 1 angefragten Identifizierungsinformationen weiterer Teilnehmer N an den Verifizierungs-Server 4 übermittelt, beispielsweise mittels Funktionen des Kommunikationsmoduls 31, zum Beispiel über die Vermittlungsstelle 23,
j) der Verifizierungs-Server 4 den oder die anzurufenden weiteren Teilnehmer N anruft, beispielsweise mittels Funktionen des Kommunikationsmoduls 41, zum Beispiel über die Vermittlungsstelle 24,
k) der Verifizierungs-Server 4 bei einer positiven Authentifizierung eines angerufenen weiteren Teilnehmers N die Verbindung zwischen diesem weiteren Teilnehmer N und der Dienstzentrale 3 erstellt und ein entsprechender Authentizitätsbeleg an die Dienstzentrale 3 übermittelt wird, beispielsweise mittels Funktionen des Kommunikationsmoduls 41, und
l) die Dienstzentrale 3 die Verbindung zwischen dem anrufenden Teilnehmer 1 und dem oder den angerufenen weiteren Teilnehmer(n) N erstellt, beispielsweise mittels Funktionen des Kommunikationsmoduls 31.

Der Fachmann wird verstehen, dass es vorteilhaft sein kann den Verifizierungs-Server 4 und die Dienstzentrale 3 auf einem gemeinsamen Computer zu implementieren, beispielsweise kann es effizienter und kostengünstiger sein den oben beschriebenen gesicherten Gesprächsdienst 34 in einer Dienstzentrale 3 zu implementieren, die gemeinsam mit dem Verifizierungs-Server 4 auf einem Computer implementiert ist, so dass die Kommunikation zwischen der Dienstzentrale 3 und dem Verifizierungs-Server 4, wie oben beschrieben, über lokale Softwareschnittstellen abgewickelt werden kann.

Die Identität eines Teilnehmers, die vom Verifizierungs-Server 4 zur Authentifizierung dieses Teilnehmers verifiziert wird, ist beispielsweise durch eine Identifizierungsnummer gegeben, die in einem Identifizierungsmodul 11 gespeichert ist, welches entfernbar mit dem genannten Kommunikationsendgerät 1 dieses Teilnehmers verbunden ist. Eine solche Identifizierungsnummer ist beispielsweise die IMSI (International Mobile Subscriber Identification), welche vor allem in der Mobiltelefonie Verwendung findet, oder eine eindeutige Nummer auf einer (persönlichen) Telefonkreditkarte 11, einer Kundenkarte und/oder Kreditkarte für eine Bank oder ein anderes Dienstleistungsunternehmen, zum Beispiel ein Warenverkaufshaus, ein Spital oder eine Versicherung, die den Besitzer dieser Karte identifiziert. Typischerweise werden solche auf Identifizierungsmodulen 11 gespeicherte Identifizierungsnummern vom Kommunikationsendgerät 1, mit welchem sie entfernbar verbunden sind, automatisch über das Telekommunikationsnetz 2 übertragen. Ein Teilnehmer kann sich auch durch eine Identifizierungsnummer oder durch ein oder mehrere Kennworte, beispielsweise Vor- und/oder Nachnamen, identifizieren, die von ihm über Bedienungselemente 12 des Kommunikationsendgeräts 1 oder mittels gesprochener Sprache eingegeben und mit dem genannten Kommunikationsendgerät 1 übermittelt werden. Teilnehmer können in gewissen Fällen auch durch die Rufnummer ihrer Kommunikationsendgeräte 1, N identifiziert werden, insbesondere Teilnehmer, die durch einen Dienst für mehrere Teilnehmer anzurufen sind, werden vorteilhafterweise mit deren Rufnummern identifiziert. Der Fachmann wird verstehen, dass auch andere Identifizierungsnummern oder Kennwörter verwendet werden können, die beispielsweise vom Telekommunikationsnetz 2, von der Dienstzentrale 3 oder vom Verifizierungs-Server 4 verwendet werden können den betreffenden Teilnehmer zu identifizieren. In einer weiteren Variante werden den Teilnehmern verschiedene Rufnummern zugewiesen um eine Dienstzentrale 3, oder einen betreffenden Dienst der Dienstzentrale 3, anzuwählen, so dass die Teilnehmer anhand der Rufnummer identifiziert werden können, die von einem Teilnehmer, respektive vom Kommunikationsendgerät 1, N dieses Teilnehmers, gewählt wurde um die Dienstzentrale 3 oder einen betreffenden Dienst der Dienstzentrale 3 anzuwählen.

Vorzugsweise werden bei der Authentifizierung eines Teilnehmers durch den Verifizierungs-Server 4 aktuelle Sprachmerkmale dieses Teilnehmers mit abgespeicherten Sprachmerkmalen dieses Teilnehmers verglichen. Zu diesem Zweck müssen Sprachproben und/oder Sprachmerkmale eines zu authentifizierenden Teilnehmers vorgängig aufgenommen und beispielsweise in einer Datenbank 36, 46 gespeichert werden. Die Datenbank 36 ist beispielsweise mit der Dienstzentrale 3 verbunden, so dass die Dienstzentrale 3, beispielsweise mittels Softwarefunktionen des Sicherungsmoduls 32, Sprachproben und/oder Sprachmerkmale für einen zu authentifizierenden Teilnehmer dieser Datenbank 36 entnehmen und zusammen mit Teilnehmeridentifizierungsinformationen, beispielsweise mittels Funktionen des Kommunikationsmoduls 31, an den Verifizierungs-Server 4 übermitteln kann. Die Datenbank 46 kann aber auch direkt mit dem Verifizierungs-Server 4 verbunden sein, so dass dieser, beispielsweise mittels Softwarefunktionen des Verifizierungsmoduls 42, Sprachproben und/oder Sprachmerkmale für einen zu authentifizierenden Teilnehmer dieser Datenbank 46 entnehmen kann.

Das Verifizierungsmodul 46 bestimmt auf herkömmliche Weise die Übereinstimmung der abgespeicherten Sprachproben und/oder Sprachmerkmale, die der angegebenen Identität entsprechen, mit der aktuellen Stimme des zu authentifizierenden Teilnehmers, wobei der zu authentifizierende Teilnehmer beispielsweise aufgefordert wird Wörter oder Zahlen nachzusprechen. Auf Grund von vordefinierten und/oder den betreffenden Diensten entsprechenden Schwellenwerten, welche beispielsweise auch von der Dienstzentrale 3 an den Verifizierungs-Server 4 übertragen werden können, kann auf Grund einer genügenden Übereinstimmung, die gleich oder besser als der betreffende vorgegebene Schwellenwert ist, eine positive Authentifizierung des betreffenden Teilnehmers resultieren und, beispielsweise durch Funktionen des Verifizierungsmoduls 42 ein entsprechender Authentizitätsbeleg generiert und an die betreffende Dienstzentrale 3 übermittelt werden. Bei einer ungenügenden Übereinstimmung, die schlechter als der betreffende vorgegebene Schwellenwert ist, kann zum Beispiel ein entsprechender negativer Bescheid an die betreffende Dienstzentrale 3 übermittelt werden. In einer weiteren Ausführungsvariante übermittelt der Verifizierungs-Server 4 einen Authentizitätsbeleg, der einen Vertrauensgrad beinhaltet, der beispielsweise dem Grad der Übereinstimmung entspricht, so dass in der Dienstzentrale 3, beispielsweise durch Softwarefunktionen des Sicherungsmoduls 32, entschieden werden kann, ob der Grad der Übereinstimmung der Authentifizierung des betreffenden Teilnehmers für die Ausführung des betreffenden Diensts oder bestimmter Funktionen diese Diensts genügt.

An dieser Stelle sollte festgehalten werden, dass der Verifizierungs-Server 4, respektive das Verifizierungsmodul 42, die Verifizierung der angegebenen Identität eines Teilnehmers grundsätzlich auch auf andere Weise als durch Vergleichen von aktuellen und abgespeicherten Sprachmerkmalen durchführen kann. Zum Beispiel kann der Teilnehmer aufgefordert werden geheime Passwörter oder PIN (Personal Identification Number) Nummern einzugeben, die vorgängig für den Teilnehmer abgespeichert wurden und für den Verifizierungs-Server 4 zugänglich sind, oder die Authentifizierung kann auf der Abfrage und Überprüfung von anderen vorher abgespeicherten persönlichen Informationen oder auf anderen bekannten Mechanismen beruhen.

Ein Authentizitätsbeleg, der vom Verifizierungs-Server 4 generiert wird, enthält Angaben, die es der Dienstzentrale 3 ermöglichen, beispielsweise mittels Softwarefunktionen des Sicherungsmoduls 32, den Authentizitätsbeleg einem betreffenden Teilnehmer und Dienst zuzuordnen, das heisst eine Teilnehmer- und Dienstidentifizierung oder eine entsprechende Auftragsnummer, die dem betreffenden Teilnehmer und Dienst zugeordnet werden kann. Ein Authentizitätsbeleg ist vorzugsweise so beschaffen, dass die Eindeutigkeit des Ursprungs der Authentifizierung gewährleistet ist, dass heisst das der Verifizierungs-Server 4 eindeutig als Quelle des Authentizitätsbelegs gegeben ist. Zudem wird ein Authentizitätsbeleg vorteilhafterweise gesichert und vertraulich übertragen, so dass sein Inhalt nicht unentdeckt manipuliert und/oder verfälscht werden kann. Der Authentizitätsbeleg ist beispielsweise ein verschlüsseltes, elektronisch signiertes Zertifikat das durch herkömmliche Verfahren zum Beispiel durch Softwarefunktionen des Verifizierungsmoduls 42 generiert wird. Insbesondere für Dienste an denen mehrere Teilnehmer involviert sind ist es auch möglich die Resultate der Authentifizierung von mehreren Teilnehmern in einem gemeinsamen Authentizitätsbeleg zu übertragen.

Der Fachmann wird verstehen, dass in der Realisierung des beschriebenen Verfahrens und Systems durchaus mehrere Verifizierungs-Server 4 eingesetzt werden können, welche beispielsweise verschiedene geografische Regionen abdecken und/oder von verschiedenen Dienstanbietern betrieben werden.

Als Beispiel für einen Dienst mit mehreren Teilnehmern wurde bereits ein gesicherter Gesprächsdienst 34 beschrieben, in welchem ein anrufender Teilnehmer 1 weitere Teilnehmer N anruft, die alle auch authentifiziert werden. Ein weiteres Beispiel ist ein Konferenzgespräch, welches beispielsweise erst während einem laufenden Gespräch von einem der Teilnehmer initiiert wird, was zum Beispiel in einem ISDN-Netz durch standardmässige Funktionalität möglich ist, und bei welchem die beteiligten Teilnehmer durch den Verifizierungs-Server 4 authentifiziert werden.

Bei Diensten mit mehreren Teilnehmern kann es, je nach Anwendung, sinnvoll sein, dass die Teilnehmer, die den Dienst nicht initiiert haben ein Gewähr für die Authentizität des Verifizierungs-Servers 4 erhalten, so dass sie nicht durch jemanden getäuscht werden können, der vorgibt ein Verifizierungs-Server 4 zu sein. Eine solche Gewähr kann beispielsweise durch den beschriebenen Authentizitätsbeleg gegeben werden, der eine Elektronische Signatur des Verifizierungs-Servers enthält, oder ein betreffender Teilnehmer kann vom Verifizierungs-Server 4 verlangen ihm ein Passwort, eine PIN-Nummer oder eine andere Information zu geben, die für den betreffenden Teilnehmer - eventuell durch diesen Teilnehmer selber - vorgängig beim Verifizierungs-Server hinterlegt, das heisst abgespeichert, wurde.

Als Dienste für einen Teilnehmer wurden die Abwicklung von Bankgeschäften oder das Telefonieren mit einer persönlichen Telefonkarte, insbesondere eine Telefonkreditkarte, erwähnt. Grundsätzlich kommen sämtliche Dienste in Frage, die für einen Benutzer mit einem Kommunikationsendgerät 1 über das Telekommunikationsnetz 2 auf einer Dienstzentrale 4 abgewickelt werden können und bei denen es wichtig ist die Identität des Benutzers dieser Dienste zu verifizieren. Als weiteres Beispiel für einen solchen Dienst kann die Abfrage von vertraulichen und persönlichen Informationen mit einem Kommunikationsendgerät 1 über ein Telekommunikationsnetz 2 von einer Dienstzentrale 3 erwähnt werden, wobei diese Informationen beispielsweise Bankinformationen, Gesundheitsinformationen, Versicherungsinformationen oder Steuerinformationen sein können. Neben der reinen Abfrage von solchen Informationen können weitere Dienste Transaktionen zwischen dem Kommunikationsendgerät 1 und der Dienstzentrale 3 einschliessen, bei denen solche Informationen nicht nur abgefragt sondern auch hinzugefügt, verändert und/oder gelöscht werden können, wobei das Hinzufügen, Verändern und/oder Löschen von mindestens gewissen solcher Informationen die Ausführung von weiteren Schritten und Aktionen, wie beispielsweise der Kauf, die Bestellung und/oder die Lieferung von Produkten, Wertschriften und/oder Dienstleistungen auslösen können.

Abschliessend sollte erwähnt werden, dass die Anwendungsmöglichkeiten für das beschriebene Verfahren und System fast grenzenlos sind und das einer der Hauptvorteile darin besteht, dass die Authentifizierung von Benutzern (Teilnehmer) von den verschiedensten Diensten, die von den verschiedensten Dienstanbietern offeriert werden, in einem zentralen Verifizierungs-Server 4 vorgenommen werden können, so dass die selben Teilnehmeridentifizierungen, Passwörter, PIN-Nummern und/oder abgespeicherten Sprachmerkmale mehrfach, in verschiedenen Diensten angewendet werden können und von den betreffenden Teilnehmern nur einmal aufgenommen werden müssen. Das beschriebene Verfahren und System machen es auch einfacher Dienstzentralen und Dienste (Dienstmodule) zu entwickeln, da für die Teilnehmerauthentifizierung standardisierte und zentralisierte Dienste verwendet werden können.

Neben dem Verkauf und oder Betrieb von beschriebenen Gesamtsystemen, können auch einzelne Komponenten, wie beispielsweise der Verifizierungs-Server 4, oder ein Verifizierungs-Server 4 kombiniert mit einer Dienstzentrale 3, die einen gesicherten Gesprächsdienst 34 ausführen kann, verkauft, vermietet oder betrieben werden. Es kann auch interessant sein Datenträger mit Softwaremodulen zu verkaufen, die einen Computer so steuern, dass er beschriebene Verfahrensschritte des Verifizierungs-Servers 4, einer Dienstzentrale 3, beispielsweise die Funktionen des Sicherungsmoduls 32, und/oder eines gesicherten Gesprächsdienstes 34 ausführt.

## Patentansprüche

1. Verfahren zur Sicherung von Diensten, die in einem Telekommunikationsnetz (2) von mit diesem Telekommunikationsnetz (2) verbundenen Dienstzentralen (3) angeboten und von Teilnehmern in diesem Telekommunikationsnetz (2) mittels geeigneten Kommunikationsendgeräten (1, N) gewählt und benützt werden, wobei die Teilnehmer authentifiziert werden, indem jeweils die angegebene Identität eines Teilnehmers verifiziert wird, und wobei der Teilnehmer durch einen zentralen Verifizierungs-Server (4) authentifiziert wird, und wobei bei der Authentifizierung eines Teilnehmers vom Verifizierungs-Server (4) ein Authentizitätsbeleg generiert wird, und wobei der generierte Authentizitätsbeleg an eine betreffende Dienstzentrale (3) übermittelt wird, **dadurch gekennzeichnet,**
**dass** auf Grund der empfangenen Authentizitätsbelege der gewisse Dienst für die am gewissen Dienst beteiligten authentifizierten Teilnehmer ausgeführt wird, und
**dass** während der Ausführung von mindestens gewissen der Dienste daran beteiligte Teilnehmer erneut authentifiziert werden, und dass der Dienst für mindestens einen Teilnehmer abgebrochen wird, wenn dieser Teilnehmer nicht positiv authentifiziert wird.

2. Verfahren gemäss vorhergehendem Anspruch, **dadurch gekennzeichnet, dass** in mindestens gewissen der genannten Dienste mehr als ein genannter Teilnehmer beteiligt ist, dass für mindestens gewisse dieser gewissen Dienste jeder der am Dienst beteiligten Teilnehmer authentifiziert wird, und dass an die betreffende genannte Dienstzentrale (3) für jeden authentifizierten Teilnehmer ein Authentizitätsbeleg übertragen wird.

3. Verfahren gemäss einem der vorhergehenden Ansprüche, **dadurch gekennzeichnet, dass** der gewisse Dienst ein gesicherter Gesprächsdienst ist, dass ein anrufender Teilnehmer der betreffenden Dienstzentrale (3), die diesen Gesprächsdienst anbietet, eine Teilnehmeridentifizierung von mindestens einem anzurufenden Teilnehmer übermittelt, und dass die betreffende Dienstzentrale (3) eine Verbindung zwischen dem anrufenden und mindestens einem anzurufenden Teilnehmer erstellt, wenn sie für diese Teilnehmer entsprechende Authentizitätsbelege erhält.

4. Verfahren gemäss einem der vorhergehenden Ansprüche, **dadurch gekennzeichnet, dass** bei der Authentifizierung eines Teilnehmers aktuelle Sprachmerkmale dieses Teilnehmers mit abgespeicherten Sprachmerkmalen dieses Teilnehmers verglichen werden.

5. Verfahren gemäss einem der vorhergehenden Ansprüche, **dadurch gekennzeichnet, dass** das Telekommunikationsnetz (2) mindestens gewisse Anrufe an eine der Dienstzentralen (3) über den Verifizierungs-Server (4) leitet.

6. Verfahren gemäss einem der vorhergehenden Ansprüche, **dadurch gekennzeichnet, dass** eine der Dienstzentralen (3) bei Anforderungen von mindestens gewissen der Dienste die Teilnehmeridentifizierungen von betreffenden zu authentifizierenden Teilnehmern an den Verifizierungs-Server (4) übermittelt.

7. Verfahren gemäss einem der vorhergehenden Ansprüche, **dadurch gekennzeichnet, dass** die Identität eines Teilnehmers durch eine Identifizierungsnummer gegeben ist, die in einem Identifizierungsmodul (11) gespeichert ist, welches entfernbar mit dem Kommunikationsendgerät (1 ) dieses Teilnehmers verbunden ist.

8. Verfahren gemäss einem der vorhergehenden Ansprüche, **dadurch gekennzeichnet, dass** die Identität eines Teilnehmers durch eine Identifizierungsnummer gegeben ist, die vom Teilnehmer über Bedienungselemente (12) des Kommunikationsendgeräts (1) eingegeben wird.

9. Verfahren gemäss einem der vorhergehenden Ansprüche, **dadurch gekennzeichnet, dass** die Identität eines Teilnehmers durch eine Identifizierungsnummer oder durch Kennworte gegeben ist, die vom Teilnehmer mittels gesprochener Sprache mit dem Kommunikationsendgerät (1) übermittelt werden.

10. Verfahren gemäss einem der vorhergehenden Ansprüche, **dadurch gekennzeichnet, dass** die Authentizitätsbelege jeweils eine elektronische Signatur umfassent.

11. Verfahren gemäss einem der vorhergehenden Ansprüche, **dadurch gekennzeichnet, dass** mindestens gewisse der Authentizitätsbelege eine Angabe über den Vertrauensgrad der betreffenden Authentifizierung umfassen.

12. Verfahren gemäss einem der vorhergehenden Ansprüche, **dadurch gekennzeichnet, dass** das Telekommunikationsnetz (2) das öffentliche geschaltete Telefonnetz umfasst.

13. Verfahren gemäss einem der vorhergehenden Ansprüche, **dadurch gekennzeichnet, dass** das Telekommunikationsnetz (2) das Internet umfasst.

14. Telekommunikationssystem, umfassend ein Telekommunikationsnetz (2) mit mindestens einer Dienstzentrale (3), welche in diesem Telekommunikationsnetz (2) Dienste anbietet, und eine Vielzahl von Kommunikationsendgeräten (1, N), mittels welchen Teilnehmer in diesem Telekommunikationsnetz (2) die Dienste wählen und benützen, wobei die Teilnehmer authentifiziert werden indem jeweils die angegebene Identität eines Teilnehmers verifiziert wird, und wobei das Telekommunikationssystem mindestens einen zentralisierten Verifizierungs-Server (4) umfasst, durch welchen die Teilnehmer authentifiziert werden, und wobei der Verifizierungs-Server (4) ein Verifizierungsmodul (42) umfasst, welches bei der Authentifizierung eines Teilnehmers einen Authentizitätsbeleg generiert, und wobei der Verifizierungs-Server (4) ein Kommunikationsmodul (41) umfasst, welches den Authentizitätsbeleg an eine betreffende Dienstzentrale (3) überträgt, **dadurch gekennzeichnet,**
**dass** die Dienstzentrale (3) ein Sicherungsmodul (32) umfasst, welches auf Grund von empfangenen Authentizitätsbelegen für betreffende Teilnehmer das den betreffenden Dienst entsprechende Dienstmodul (33, 34) ausführt, und
**dass** die Dienstzentrale (3) und/oder der Verifizierungs-Server (4) während der Ausführung von mindestens gewissen der Dienste die erneute Authentifizierung daran beteiligter Teilnehmer veranlassen kann, und dass die Dienstzentrale (3) und/oder der Verifizierungs-Server (4) einen betreffenden Dienst für mindestens einen Teilnehmer abbrechen kann, wenn dieser Teilnehmer nicht positiv authentifiziert wird.

15. Telekommunikationssystem gemäss vorhergehendem Anspruch, **dadurch gekennzeichnet, dass** die Dienstzentrale (3) mindestens gewisse Dienstmodule (33, 34) umfasst, die Dienste ausführen, an denen mehr als ein Teilnehmer beteiligt ist, und dass die Dienstzentrale (3) eine Tabelle (35) umfasst, in welcher für betreffende Dienste Teilnehmeridentifizierungen der an diesem Dienst beteiligten Teilnehmer und Angaben über die Authentifizierung dieser Teilnehmer abgespeichert werden.

16. Telekommunikationssystem gemäss einem der Ansprüche 14 bis 15, **dadurch gekennzeichnet, dass** mindestens eines der Dienstmodule (33, 34) einen gesicherten Gesprächsdienst ausführt, wobei von einem anrufenden Teilnehmer eine Teilnehmeridentifizierung von mindestens einem anzurufenden Teilnehmer entgegengenommen wird und wobei dieses Dienstmodul (33, 34) eine Verbindung zwischen dem anrufenden und dem mindestens einen anzurufenden Teilnehmer erstellt, wenn für diese Teilnehmer entsprechende Authentizitätsbelege empfangen werden.

17. Telekommunikationssystem gemäss einem der Ansprüche 14 bis 16, **dadurch gekennzeichnet, dass** es mindestens eine Datenbank (36, 46) umfasst in welcher Sprachmerkmale von Teilnehmern abgespeichert sind, und dass das Verifizierungsmodul (42) für die Authentifizierung eines Teilnehmers aktuelle Sprachmerkmale dieses Teilnehmers mit abgespeicherten Sprachmerkmalen dieses Teilnehmers vergleichen kann.

18. Telekommunikationssystem gemäss einem der Ansprüche 14 bis 17, **dadurch gekennzeichnet, dass** das Telekommunikationsnetz (2) mindestens gewisse Anrufe an die Dienstzentrale (3) über den Verifizierungs-Server (4) leiten kann, und dass der Verifizierungs-Server (4) die gewissen Anrufe an die Dienstzentrale (3) weiterleiten kann.

19. Telekommunikationssystem gemäss einem der Ansprüche 14 bis 18, **dadurch gekennzeichnet, dass** die Dienstzentrale (3) die Teilnehmeridentifizierungen von betreffenden zu authentifizierenden Teilnehmern an den Verifizierungs-Server (4) übermitteln kann, und dass der Verifizierungs-Server (4) die Teilnehmeridentifizierungen entgegennehmen kann.

20. Telekommunikationssystem gemäss einem der Ansprüche 14 bis 19, **dadurch gekennzeichnet, dass** die Identität eines Teilnehmers durch eine Identifizierungsnummer gegeben ist, die in einem Identifizierungsmodul (11) gespeichert ist, welches entfernbar mit dem Kommunikationsendgerät (1) dieses Teilnehmers verbunden ist.

21. Telekommunikationssystem gemäss einem der Ansprüche 14 bis 20, **dadurch gekennzeichnet, dass** die Identität eines Teilnehmers durch eine Identifizierungsnummer gegeben ist, die vom Teilnehmer über Bedienungselemente (12) des Kommunikationsendgeräts (1) eingegeben wird.

22. Telekommunikationssystem gemäss einem der Ansprüche 14 bis 21, **dadurch gekennzeichnet, dass** die Identität eines Teilnehmers durch eine Identifizierungsnummer oder Kennworte gegeben ist, die vom Teilnehmer mittels gesprochener Sprache mit dem Kommunikationsendgerät (1) übermittelt werden.

23. Telekommunikationssystem gemäss einem der Ansprüche 14 bis 22, **dadurch gekennzeichnet, dass** die Authentizitätsbelege jeweils eine elektronische Signatur umfassen.

24. Telekommunikationssystem gemäss einem der Ansprüche 14 bis 23, **dadurch gekennzeichnet, dass** mindestens gewisse Authentizitätsbelege eine Angabe über den Vertrauensgrad der betreffenden Authentifizierung umfassen.

25. Telekommunikationssystem gemäss einem der Ansprüche 14 bis 24, **dadurch gekennzeichnet, dass** das Telekommunikationsnetz (2) das öffentliche geschaltete Telefonnetz umfasst.

26. Telekommunikationssystem gemäss einem der Ansprüche 14 bis 25, **dadurch gekennzeichnet, dass** das Telekommunikationsnetz (2) das Internet umfasst.

## Claims

1. Method for securing services which are offered in a telecommunication network (2) by service central units (3) connected to this telecommunication network (2), and are selected and used by subscribers in this telecommunication network (2) by means of suitable communication terminals (1, N), the subscribers being authenticated in that the indicated identity of a subscriber is verified in each case, and the subscriber being authenticated through a central verification server (4), and, during the authentication of a subscriber, an authenticity record being generated by the verification server (4), and the generated authenticity record being transmitted to a respective service central unit (3), **characterised**
**in that**, based on the received authenticity records, the particular service is performed for the authenticated subscriber taking part in the particular service, and
during the performance of at least certain of the services subscribers taking part therein are authenticated again, and in that the service is discontinued for at least one subscriber if this subscriber is not positively authenticated.

2. Method according to the preceding claim, **characterised in that** more than one said subscriber takes part in at least certain of the said services, **in that** each subscriber taking part in the service is identified for at least certain of these particular services, and **in that** an authenticity record is transmitted for each authenticated subscriber to the respective said service central unit (3).

3. Method according to one of the preceding claims, **characterised in that** the particular service is a secured call service, **in that** a calling subscriber transmits to the respective service central unit (3) that offers this call service a subscriber identification for at least one subscriber to be called, and **in that** the respective service central unit (3) establishes a connection between the calling subscriber and at least one subscriber to be called if it receives corresponding authenticity records for these subscribers.

4. Method according to one of the preceding claims, **characterised in that** during the authentication of a subscriber current speech features of this subscriber are compared with stored speech features of this subscriber.

5. Method according to one of the preceding claims, **characterised in that** the telecommunication network (2) directs at least certain calls to one of the service central units (3) via the verification server (4).

6. Method according to one of the preceding claims, **characterised in that**, upon requests from at least certain of the services, one of the service central units (3) transmits the subscriber identifications of respective subscribers to be authenticated to the verification server (4).

7. Method according to one of the preceding claims, **characterised in that** the identity of a subscriber is given through an identification number, which is stored in an identification module (11) that is removably connected to the communication terminal (1) of this subscriber.

8. Method according to one of the preceding claims, **characterised in that** the identity of a subscriber is given through an identification number that is entered by the subscriber via operating elements (12) of the communication terminal (1).

9. Method according to one of the preceding claims, **characterised in that** the identity of a subscriber is given through an identification number or through passwords which are transmitted by the subscriber by means of spoken language using the communication terminal (1).

10. Method according to one of the preceding claims, **characterised in that** the authenticity records each comprise an electronic signature.

11. Method according to one of the preceding claims, **characterised in that** at least certain of the authenticity records comprise an indication about the degree of reliability of the respective authentication.

12. Method according to one of the preceding claims, **characterised in that** the telecommunication network (2) includes the public switched telephone network.

13. Method according to one of the preceding claims, **characterised in that** the telecommunication network (2) includes the Internet.

14. Telecommunication system, comprising a telecommunication network (2) with at least one service central unit (3), which offers services in this telecommunication network (2), and a multiplicity of communication terminals (1, N), by means of which subscribers select and use the services in this telecommunication network (2), the subscribers being authenticated by the indicated identity of a subscriber being verified in each case, and the telecommunication system comprising at least one centralised verification server (4), through which the subscribers are authenticated, and the verification server (4) comprising a verification module (42), which generates an authenticity record during the authentication of a subscriber, and the verification server (4) comprising a communication module (41), which transmits the authenticity record to a respective service central unit (3), **characterised**
**in that** the service central unit (3) comprises a securing module (32) which, based on the received authenticity records for respective subscribers, implements the service module (33, 34) for the respective service, and
**in that** during the performance of at least certain of the services the service central unit (3) and/or the verification server (4) is able to initiate the reauthentication of subscribers participating therein, and in that the service central unit (3) and/or the verification server (4) is able to discontinue a respective service for at least one subscriber if this subscriber is not positively authenticated.

15. Telecommunication system according to the preceding claim, **characterised in that** the service central unit (3) comprises at least certain service modules (33, 34) which perform services in which more than one subscriber take part, and **in that** the service central unit (3) comprises a table (35) in which stored for respective services are subscriber identifications of the subscribers taking part in this service and particulars about the authentication of these subscribers.

16. Telecommunication system according to one of the claims 14 to 15, **characterised in that** at least one of the service modules (33, 34) performs a secured call service, a subscriber identification of at least one subscriber to be called being received from a calling subscriber, and this service module (33, 34) establishing a connection between the calling subscriber and the at least one subscriber to be called if corresponding authenticity records are received for these subscribers.

17. Telecommunication system according to one of the claims 14 to 16, **characterised in that** it comprises at least one database (36, 46) in which speech features of subscribers are stored, and **in that** for authentication of a subscriber the verification module (42) is able to compare current speech features of this subscriber with stored speech features of this subscriber.

18. Telecommunication system according to one of the claims 14 to 17, **characterised in that** the telecommunication network (2) is able to direct at least certain calls to the service central unit (3) via the verification server (4), and **in that** the verification server (4) is able to forward the particular calls to the service central unit (3).

19. Telecommunication system according to one of the claims 14 to 18, **characterised in that** the service central unit (3) is able to transmit the subscriber identifications of respective subscribers to be authenticated to the verification server (4), and **in that** the verification server (4) is able to receive the subscriber identifications.

20. Telecommunication system according to one of the claims 14 to 19, **characterised in that** the identity of a subscriber is given through an identification number which is stored in an identification module (11) that is removably connected to the communication terminal (1) of this subscriber.

21. Telecommunication system according to one of the claims 14 to 20, **characterised in that** the identity of a subscriber is given through an identification number that is entered by the subscriber via operating elements (12) of the communication terminal (1).

22. Telecommunication system according to one of the claims 14 to 21, **characterised in that** that the identity of a subscriber is given through an identification number or passwords which are transmitted by the subscriber by means of spoken language using the communication terminal (1).

23. Telecommunication system according to one of the claims 14 to 22, **characterised in that** the authenticity records each comprise an electronic signature.

24. Telecommunication system according to one of the claims 14 to 23, **characterised in that** at least certain authenticity records comprise an indication of the degree of reliability of the respective authentication.

25. Telecommunication system according to one of the claims 14 to 24, **characterised in that** the telecommunication network (2) includes the public switched telephone network.

26. Telecommunication system according to one of the claims 14 to 25, **characterised in that** the telecommunication network (2) includes the Internet.

## Revendications

1. Procédé pour la sécurité de services qui sont proposés dans un réseau de télécommunication (2) de centrales de services (3) et qui sont sélectionnés et utilisés par des abonnés dans ce réseau de télécommunication (2) au moyen de terminaux de communication appropriés (1, N), les abonnés étant identifiés dans le fait que l'identité indiquée d'un abonné est vérifiée et l'abonné étant authentifié par un serveur central de vérification (4), et lors de l'authentification d'un abonné un justificatif d'authenticité étant généré par le serveur (4) et le justificatif d'authenticité généré étant transmis à une centrale de services considérée (3),
**caractérisé en ce que** sur la base des justificatifs d'authentification reçus, le service considéré est exécuté pour les abonnés authentifiés participant au service, et
**en ce que** pendant l'exécution d'au moins certains de ces services, des abonnées participants sont à nouveau authentifiés et **en ce que** le service pour au moins un abonné est interrompu si cet abonné ne fait pas l'objet d'une authentification positive.

2. Procédé selon la revendication précédente, **caractérisé en ce que** plusieurs desdits abonnés peuvent être impliqués dans au moins certains desdits services, **en ce que** pour au moins certains de ces services chaque abonné impliqué dans ce service est authentifié et **en ce qu'**il est transmis pour chaque abonné authentifié un justificatif d'authentification à la dite centrale de service concernée (3).

3. Procédé selon l'une des revendications précédentes, **caractérisé en ce que** le service considéré est un service sécurisé d'appel, **en ce qu'**un abonné appelant de la centrale de service concernée (3) qui propose ce service d'appel sécurisé, transmet une identification d'abonné d'au moins un abonné appelant et **en ce que** la centrale de service considérée (3) établit une connexion entre l'abonné appelant et au moins un abonné appelé si elle reçoit des justificatifs d'authenticité correspondant à ces abonnés.

4. Procédé selon l'une des revendications précédentes, **caractérisé en ce que** lors de l'authentification d'un abonné, des caractéristiques vocales actuelles de cet abonné sont comparées aux caractéristiques stockées de cet abonné.

5. Procédé selon l'une des revendications précédentes, **caractérisé en ce que** le réseau de télécommunication (2) transmet au moins certains appels à l'une des centrales de service (3) par l'intermédiaire du serveur de vérification (4).

6. Procédé selon l'une des revendications précédentes, **caractérisé en ce que** l'une des centrales de service (3) transmet à la commande d'au moins certains services les identifications d'abonnés concernés à authentifier au serveur de vérification (4).

7. Procédé selon l'une des revendications précédentes, **caractérisé en ce que** l'identité d'un abonné est donnée par un numéro d'identification qui est stocké dans un module d'identification (11) lequel est relié de manière amovible au terminal de communication (1) de cet abonné.

8. Procédé selon l'une des revendications précédentes, **caractérisé en ce que** l'identité d'un abonné est donnée par un numéro d'identification qui est saisi par l'abonné par les éléments de commande (12) du terminal de communication (1).

9. Procédé selon l'une des revendications précédentes, **caractérisé en ce que** l'identité d'un abonné est donnée par un numéro d'identification ou par des mots de passe qui sont transmis par commande vocale par le terminal de communication (1).

10. Procédé selon l'une des revendications précédentes, **caractérisé en ce que** les justificatifs d'authenticité comprennent respectivement une signature électronique.

11. Procédé selon l'une des revendications précédentes, **caractérisé en ce qu'**au moins certains des justificatifs d'authenticité comprennent une indication sur le degré de fiabilité de l'authentification considérée.

12. Procédé selon l'une des revendications précédentes, **caractérisé en ce que** le réseau de télécommunication (2) comprend le réseau téléphonique public commuté.

13. Procédé selon l'une des revendications précédentes, **caractérisé en ce que** le réseau de télécommunication (2) comprend l'Internet.

14. Système de télécommunication comprenant un réseau de télécommunication (2) avec au moins une centrale de service (3) qui propose dans ce réseau de télécommunication (2) des services et un grand nombre de terminaux de communication (1, N) au moyen desquels des abonnés sélectionnent et utilisent dans ce réseau de télécommunication (2) les services, les abonnés étant authentifiés dans le fait que respectivement l'identité indiquée d'un abonnée est vérifiée et le système de télécommunication comprenant au moins un serveur centralisé de vérification (4) qui permet d'authentifier les abonnés et le serveur de vérification (4) comprenant un module de vérification (42) qui génère lors de l'authentification d'un abonné un justificatif d'authenticité et le serveur de vérification (4) comprenant un module de communication (41) qui transmet le justificatif d'authenticité à une centrale de service considérée (3), **caractérisé**
**en ce que** la centrale de service (3) comprend un module de sécurité (32) qui exécute sur la base de justificatifs d'authenticité reçus pour les abonnés considérés le module de service (33, 34) correspondant au service considéré,
**en ce que** la centrale de service (3) et/ou le serveur de vérification (4) peut provoquer lors de l'exécution d'au moins certains de services une nouvelle authentification des abonnés concernés et en ce que la centrale de service (3) et/ou le serveur de vérification (4) peut interrompre un service concerné pour au moins un abonné si cet abonné n'a pas fait l'objet d'une authentification positive.

15. Système de télécommunication selon la revendication précédente, **caractérisé en ce que** la centrale de service (3) comprend au moins certains modules de service (33, 34) qui exécute les services auxquels participent plusieurs abonnés et **en ce que** la centrale de service (3) comprend un tableau (35) dans lequel sont stockées pour des services concernés des identifications des abonnés participant à ce service et des indications sur l'authentification de ces abonnés.

16. Système de télécommunication selon l'une des revendications 14 à 15, **caractérisé en ce qu'**au moins l'un des modules de service (33, 34) exécute un service d'appel sécurisé, une identification d'abonné appelant étant réceptionnée par un abonné appelé et ce module de service (33, 34) établissant une connexion entre l'abonné appelant et au moins un abonné appelé si des justificatifs d'authentification correspondants pour ces abonnés ont été reçus.

17. Système de télécommunication selon l'une des revendications 14 à 16, **caractérisé en ce qu'**il comprend au moins une banque de données (36, 46) dans laquelle sont stockées des caractéristiques vocales d'abonnés et **en ce que** le module de vérification (42) peut compare des caractéristiques vocales actuelles de cet abonné avec des caractéristiques vocales stockées de cet abonné pour l'authentification d'un abonné.

18. Système de télécommunication selon l'une des revendications 14 à 17, **caractérisé en ce que** le réseau de télécommunication (2) peut transférer au moins certains appels à la centrale de service (3) par l'intermédiaire du serveur de vérification (4) et ce que le serveur de vérification (4) peut transmettre les dits appels à la centrale de service (3).

19. Système de télécommunication selon l'une des revendications 14 à 18, **caractérisé en ce que** la centrale de service (3) peut transmettre au serveur de vérification (4) les identifications d'abonnés concernés à authentifier et **en ce que** le serveur de vérification (4) peut recevoir les identifications d'abonnés.

20. Système de télécommunication selon l'une des revendications 14 à 19, **caractérisé en ce que** l'identité d'un participant est donnée par un numéro d'identification qui est stocké dans un module d'identification (11) qui est relié de manière amovible au terminal de communication (1) de cet abonné.

21. Système de télécommunication selon l'une des revendications 14 à 21, **caractérisé en ce que** l'identité d'un abonné est donnée par un numéro d'identification qui est saisi par l'abonné au moyen les éléments de commande (12) du terminal de communication (1).

22. Système de télécommunication selon l'une des revendications 14 à 21, **caractérisé en ce que** l'identité d'un abonné est donnée par un numéro d'identification ou par des mots de passe qui sont transmis par commande vocale par le terminal de communication (1).

23. Système de télécommunication selon l'une des revendications 14 à 22, **caractérisé en ce que** les justificatifs d'authenticité comprennent respectivement une signature électronique.

24. Système de télécommunication selon l'une des revendications 14 à 23, **caractérisé en ce qu'**au moins certains des justifications d'authenticité comprennent une indication sur le degré de fiabilité de l'authentification considérée.

25. Système de télécommunication selon l'une des revendications 14 à 24, **caractérisé en ce que** le réseau de télécommunication (2) comprend le réseau téléphonique public commuté.

26. Système de télécommunication selon l'une des revendications 14 à 25, **caractérisé en ce que** le réseau de télécommunication (2) comprend l'Internet.
